# EUROPÄISCHE PATENTSCHRIFT

(11) **EP 1 351 536 B1**
(45) Veröffentlichungstag und Bekanntmachung des Hinweises auf die Patenterteilung: **01.09.2004**
(21) Anmeldenummer: 02405187.2
(22) Anmeldetag: 11.03.2002
(51) Int. Cl.: H04Q 7/38, H04L 12/56, G06F 1/00

(54) **Anmeldesystem und -verfahren in einem drahtlosen lokalen Netzwerk**
Method and system for registration in a wireless local network
Méthode et système de registration dans un réseau local sans fil

(43) Veröffentlichungstag der Anmeldung: 08.10.2003
(73) Patentinhaber: Swisscom Mobile AG, 3050 Bern (CH)
(72) Erfinder: Schmid, Martin, 3072 Ostermundigen (CH); Lauper, Eric, 3014 Bern (CH)
(74) Vertreter: BOVARD AG - Patentanwälte

(56) Entgegenhaltungen:
- EP-A- 1 107 089
- US-A- 5 862 480
- US-A- 6 078 908
- KARCHER H: "Mobile Business: High-Speed Convenience for Business Travelers at Hotels and Airports" SIEMENS , 24. April 2001 (2001-04-24), XP002200065
- "Remote Authentication Dial In User Service (RADIUS)" RFC 2865, [Online] 1. Juni 2000 (2000-06-01), Seiten 1-76, XP002209985 Gefunden im Internet: <URL:http://alternic.net/rfcs/rfc2800/rfc2 865.html> [gefunden am 2002-08-15]

## Beschreibung

Die vorliegende Erfindung betrifft ein Verfahren und System zur Authentifizierung von mobilen Netzwerkeinheiten (Nodes) in einem drahtlosen lokalen Netzwerk WLAN (Wireless Local Area Network), wobei zur Authentifikation der mobilen Netzwerkeinheit benutzerspezifische Authentifikationsdaten über einen Access Point des WLAN an eine Zentraleinheit übermittelt werden, wobei die benutzerspezifische Authentifikationsdaten mit mindestens Teilen von zur Authentifikation in einer Datenbank zugeordnet abgespeicherten Benutzerdaten durch die Zentraleinheit verglichen werden und wobei bei erfolgreicher Authentifizierung die mobilen Netzwerkeinheit zur Benutzung des WLAN durch die Zentraleinheit freigegeben wird. Insbesondere betrifft die Erfindung ein Verfahren und System, bei welchem die Authentifikation von verschiedenen WLANs mit unterschiedlichen Access Point Servern über eine mit den Access Point Server verbundene Zentraleinheit erfolgt.

Lokale Netzwerke (LAN: Local Area Network) bestehen üblicherweise aus sog. Nodes, welche verbunden sind über physikalische Medien, wie z.B. Koaxialkabel, Twisted Pair oder optische Glasfaserkabel. Diese LANs werden auch als wired LANs (verdrahtete Festnetze) bezeichnet. In den letzten Jahren sind auch drahtlose LANs, sog. wireless LANs immer populärer geworden (z.B. durch Entwicklungen wie das AirPort-System der Apple Computer, Inc.). Wireless LANs sind speziell geeignet um mobile Einheiten (Nodes), wie z.B. Laptops, Notebooks, PDAs (Personal Digital Assistant) oder Mobilfunkgeräte, insbesondere Mobilfunktelefone, mit einer entsprechenden Schnittstelle, in ein lokales Computernetzwerk einzubinden. Die mobilen Nodes besitzen einen Adapter, welcher einen Sender/Empfänger sowie eine Kontrollkarte umfasst (wie z.B. Infrarot(IR)-Adapter oder einen Tieffrequenzradiowellen-Adapter). Der Vorteil von solchen mobilen Nodes ist, dass sie innerhalb der Reichweite des wireless LANs frei bewegt werden können. Die mobilen Nodes kommunizieren entweder direkt miteinander (Peer-to-Peer wireless LAN) oder schicken ihr Signal an eine Basisstation, welche das Signal verstärkt und/oder weiterleitet. Die Basisstationen können ebenfalls Bridgefunktionen umfassen. Über solche Basisstationen mit Bridgefunktionen, sog. Access Points (AP), können die mobilen Nodes des drahtlosen LAN auf ein wired LAN zugreifen. Typische Netzwerkfunktionen eines Access Points umfassen das Übertragen von Meldungen von einem mobilen Node zu einem anderen, das Senden von Meldungen vom wired LAN zu einem mobilen Node und das Übertragen von Meldungen eines mobilen Nodes auf das wired LAN.

Die physikalische Reichweite eines AP wird Basic Service Area (BSA) genannt. Befindet sich ein mobiler Node innerhalb der BSA eines AP, kann er mit diesem AP kommunizieren, falls der AP ebenfalls innerhalb der Signal-Reichweite (Dynamic Service Area (DSA)) des mobilen Nodes liegt. Mobile Nodes besitzen typischerweise eine Signalstärke von 100 mWatt bis zu einem Watt. Um das wireless LAN mit dem wired LAN zu verbinden, ist es für den AP wichtig zu bestimmen, ob eine bestimmte Meldung (information frame) auf dem Netz für einen Node bestimmt ist, der innerhalb des wired LAN oder innerhalb des wireless LAN liegt und diese Information, falls notwendig, an den entsprechenden Node weiterzuleiten. Für diesen Zweck besitzen APs sog. Bridge-Funktionen, z.B. entsprechend dem Standard IEEE Std 802.1 D-1990 "Media Access Control Bridge" (31-74 ff). Bei solchen Bridgefunktionen wird ein neuer mobiler Node im wireless LAN typischerweise in einer FDB (Filtering Database) des AP registriert, in dessen Reichweite der Node liegt. Bei jedem Information-Frame auf dem LAN vergleicht der AP die Zieladresse mit den Adressen (MAC-Adressen (Media Access Control Addresses)), welche er im FDB abgespeichert hat und sendet, verwirft oder überträgt den Frame auf das wired LAN bzw. auf das wireless LAN. Die Reichweite eines wireless LAN ist limitiert durch Faktoren, wie z.B. Wellenlänge des Signals, Signalstärke, Hindernisse etc. Die Radiofrequenzparameter sind gemäss den in den meisten Ländern bestehenden mehr oder weniger strengen Vorschriften nicht frei wählbar, was die Reichweite weiter einschränkt.

Für WLAN existieren viele verschiedene Zugriffsverfahren (Access-Verfahren) im Stand der Technik, welche einem Benutzer eines mobilen Netzgerätes erlauben, auf ein lokales drahtloses Netzwerk zuzugreifen. Einige dieser Access-Verfahren, wie z.B. Carrier Sense Multiple Access/Collision Detection (CSMA/CD) oder Token-Passing, zeigten einen grossen Erfolg in ihrer industriellen Verwendung. Heute hat die Benutzung von Local oder Wide LANs meist keine klar definierten, vorausbestimmten Charakteristiken mehr. Mit dem Aufkommen von heterogenem Multimediadatenaustausch (z.B. Video-Daten-Streams etc.) über WLANs werden die Quality of Service (QoS) Parameter für eine bestimmte Datenaustausch-Art (oder Applikation) immer wichtiger. Solche Parameter umfassen z.B. höchstmögliche Bandbreite, tiefstmöglichen Delay etc. Für solche Zugriffe wurden neue Zugriffsverfahren in den asynchronen oder synchronen Netzwerken entwickelt und können im Stand der Technik gefunden werden.

Zusammen mit dem Aufkommen der WLAN und der Standardisierung der Zugriffsverfahren und der physikalischen Layerspezifikationen für WLANS, wie z.B. den 802.X physikalischen Layerprotokollen und nicht 802.X Protokollen (z.B. ATM: Asynchronous Transfer Mode Protocol) wurde auch das Sicherheitsbedürfnis für Benutzer und Dienstanbieter solcher Netze immer grösser. Benutzererkennung über traditionelle Verfahren z.B. mit der Eingabe eines Benutzernamens (Username) und eines Passwortes genügen den heutigen Anforderungen moderner WLANs meistens nicht mehr. Im Stand der Technik wurden deshalb verschiedenste Verbesserungen der Authentifizierung eines Benutzers vorgeschlagen. Einige davon hatten grossen Erfolg sowohl in der Industrie als auch im Home-Sektor. Eine weit verbreitete Methode zur Erhöhung der Sicherheit ist z.B. eine Authentifikation, bei welcher der Benutzer zusätzlich einen Identifikationcode einer Streichliste mit persönlichen Identifikationcodes eingibt. Die Streichliste muss vorgängig dem Benutzer von Dienstanbieter des Netzes zugänglich gemacht worden sein. Gängige Beispiele für solche Anwendungen sind heute fast im gesamten E-Banking-Bereich zu finden. Nachteil einer solchen Authentifizierung ist, dass trotz dem Streichlistenverfahren nur eine eingeschränkte Sicherheit erreicht werden kann, insbesondere wenn z.B. die Streichliste gestohlen oder verloren wird oder anderweitig abhanden kommt. Ein weiterer Nachteil der Streichlisten ist der für den Benutzer unhandliche, komplizierte Umgang, so muss er z.B. die Streichliste stets mit sich führen, wenn die Authentifikation vorgenommen wird. Vergisst er einmal, einen Kode zu streichen oder überspringt er aus Versehen einen Kode, funktioniert die Streichliste nicht mehr. Im Stand der Technik sind auch sog. digitale Unterschriften bekannt, mittels welchen Daten im Allgemeinen, insbesodere aber auch Authentifikationsdaten zusätzlich authentifiziert werden können. Der Benutzer fügt seine digitale Unterschrift den Authentifikationsdaten bei, wobei die digitale Unterschrift mittels einem geheimen privaten Schlüssel erzeugt wird. Die digitale Unterschrift kann dann mit einem öffentlichen Schlüssel, der mathematisch mit dem privaten Schlüssel verknüpft ist, auf seine Authentizität überprüft werden. So lassen sich z.B. die Authentifikationsdaten basierend auf den beiden Schlüsseln chiffrieren und dechiffrieren. Damit wird eine zusätzliche Sicherheit erreicht, dass z.B. der Benutzername und das Passwort von Dritten abgefangen werden können. Solche Verschlüsselungsalgorithmen erfordern jedoch einen grossen mathematischen Entwicklungsaufwand und ständige Weiterentwicklung, um mit der verbesserten Dechiffriertechnik und der zunehmenden Rechenleistung Schritt halten zu können. Als Drittes sei hier die Verwendung einer Identifizierungskarte aufgeführt, wie sie z.B. in der Mobilfunktechnologie weit verbreitet ist. Bei der Identifizierungskarte kann es sich z.B. um Chipkarten, wie eine SIM-Karten (Subscriber Identity Module) oder Smart-Cards handeln. Auf diesen Karten befindet sich in einem geschützten und für den Benutzer nicht zugänglichen Speicherbereich ein Identifikationscode, der als zusätzliches Authentifikationsmerkmal dienen kann. Mit einer solchen SIM-Karte kann das Gerät, in welchem die SIM-Karte verwendet wird, eindeutig identifiziert werden und einem Benutzer zugeordnet werden. Im Mobilfunkbereich wird so als Identifikation der Chipkarte z.B. eine der Chipkarte zugeordnete MSISDN (Mobile Subscriber ISDN), d.h. die Rufnummer und/oder eine IMSI (International Mobile Subscriber Identification) verwendet werden. Typischerweise ist die IMSI in einem geschützten Speicherbereich der SIM-Karte gespeichert und wird über ein HLR (Home Location Register) oder ein VLR (Visitor Location Register) der entsprechenden MSISDN zugeordnet. Der Nachteil der Verwendung einer Identifizierungskarte, wie einer SIM-Karte des Standes der Technik ist, dass die wenigsten mobilen Einheiten (Nodes) über einen entsprechenden Chipkartenleser verfügen. Zudem müssen die Kosten für die Identifikationskarten irgendwie auf den Benutzer abgewälzt werden. Eine Lösung unter Verwendung eines zusätzlichen Kanals zur Übermittlung des Passwortes, unter z.B. Benutzung eines Mobilfunkgerätes, wird in der Patentanmeldung EP 0 976 015 beschrieben. Der Nachteil dieses Standes der Technik ist jedoch, dass der Benutzer die Erstellung des Passwortes nicht beeinflussen kann, was die Sicherheit der Authentifikation des Benutzers erheblich verringert. Die US-Patentschrift US 6078908 offenbart ein Verfahren zur Autorisation eines Systems eines Benutzers. Das Verfahren umfasst eine zweistufige Autorisation, wobei in einem ersten Schritt das System des Benutzers eine Autorisationsnummer generiert und an eine Recheneinheit über einen ersten Kanal schickt, und die Recheneinheit in einem zweiten Schritt über einen zweiten Kanal entweder die Autorisationsnummer oder ein generiertes Passwort an den Benutzer schickt, womit der Benutzer das System autorisieren kann. Der Request for Comments 2865 gibt im entsprechenden Dokument XP-002209985 den offiziellen Protokollstandard für RADIUS (Remote Authentification Dial In User Service) wider, wobei die Authentifikation eines Systems mittels dem RADIUS-Standard durchgeführt wird. Die Authentifikation mittels RADIUS findet über einen einzigen Kanal statt, über welchen sich das System ebenfalls ins Netzwerk einbindet.

Es ist eine Aufgabe dieser Erfindung, ein neues Verfahren und System zur Authentifizierung von mobilen Nodes in einem drahtlosen lokalen Netzwerk vorzuschlagen, welches die oben beschriebenen Nachteile nicht aufweist. Insbesondere soll dem Benutzer grösstmögliche Sicherheit bei der Authentifikation geboten werden, ohne dass die Anschaffung von zusätzlicher Hardware oder das Verwalten von vorgegebenen Passwörtern nötig ist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass beim Anmelden einer mobilen Netzwerkeinheit eines Benutzers in einem WLAN (Wireless Local Area Network: drahtloses lokales Netzwerk) zur Authentifikation des Benutzers benutzerspezifische Authentifikationsdaten über einen Access Point des WLAN an eine Zentraleinheit übermittelt werden, die benutzerspezifische Authentifikationsdaten mit mindestens Teilen von zur Authentifikation in einer Datenbank zugeordnet abgespeicherten Benutzerdaten durch die Zentraleinheit verglichen werden und bei erfolgreicher Authentifizierung die mobile Netzwerkeinheit zur Benutzung des WLAN durch die Zentraleinheit freigegeben wird, wobei die mobile Netzwerkeinheit einem Identifikationscode des Benutzers zusammen mit vom Benutzer bestimmbare Zusatzinformationsdaten an die Zentraleinheit übermittelt, wobei die Zentraleinheit basierend auf dem Identifikationscode und der vom Benutzer bestimmbaren Zusatzinformationsdaten ein Login-Passwort generiert und das Login-Passwort an ein dem Benutzer zugeordnetes Mobilfunkgerät eines Mobilfunknetzes sendet, wobei der Benutzer die mobile Netzwerkeinheit mittels des erhaltenen Login-Passworts im WLAN anmeldet. Das Login-Passwort dient der Zentraleinheit dabei als Trigger für die Authentifikation. Die Access Points eines WLAN kommunizieren mit einem zugeordneten Radiusserver, wobei mehrere Radiusserver unterschiedlicher WLAN mit der Zentraleinheit verbunden sind, und wobei das Login-Passwort zusätzlich basierend auf serverspezifischen Daten des Radiusserver generiert wird, in dessen WLAN der Benutzer die mobile Netzwerkeinheit anmeldet. Dies hat u.a. den Vorteil, dass mehrere WLAN zentral verwaltet werden können. Dies ergibt Vorteile im Kosten- und Zeitaufwand. Zudem ermöglicht das Generieren des Login-Passwortes, basierend auf serverspezifischen Daten durch topologischeingeschränkte Netzzugriffserlaubnis, die Sicherheit weiter zu erhöhen. Die Authentifikation wird durch die Identifizierbarkeit des Mobilfunknetzbenutzers und das Senden des Login-Passwortes über ein anderes Netz an ein von der mobilen Netzwerkeinheit unabhängiges Gerät maximal erhöht. Gleichzeitig wird die Sicherheit durch das Hinzufügen von vom Benutzer bestimmbaren Zusatzinformationsdaten weiter erhöht. Diese Daten können als Ausführungsvariante von Benutzer sogar vollkommen frei wählbare Zusatzinformationsdaten sein, wobei die Zusatzinformationsdaten als Grenzfall auch leer sein können. Das ganze Verfahren und System lässt sich insbesondere realisieren, ohne dass benutzerseitig an der mobilen Netzwerkeinheit irgendwelche Hardwareveränderungen notwendig wären und ist deshalb im Vergleich zu Hardware-Lösungen, wie z.B. mit einer SIM-Karte und SIM-Karten-Leser, viel kostengünstiger. Dies betrifft nicht nur die Hardwarekosten sondern auch deren Installation. Es muss auch darauf hingewiesen werden, dass bei mobilen Netzwerkeinheiten häufig Gewicht- und Platzüberlegungen eine Rolle spielen. Die vorliegende Erfindung benötigt weder zusätzlichen Hardwareplatz, noch hat sie eine Gewichtserhöhung des mobilen Endgerätes (Netzwerkeinheit) zur Folge.

In einer anderen Ausführungsvariante umfassen die vom Benutzer bestimmbaren Zusatzinformationsdaten geographische und/oder topographische Angaben. Diese Ausführungsvariante hat u.a. den Vorteil, dass die Sicherheit z.B. durch Ermitteln des momentanen Access Points der mobilen Netzwerkeinheit weiter erhöht werden kann.

In einer weiteren Ausführungsvariante umfassen die vom Benutzer bestimmbaren Zusatzinformationsdaten Zeitangaben. Diese Ausführungsvariante hat u.a. den Vorteil, dass die Sicherheit durch z.B. eine zeitliche Zugriffsbeschränkung der mobilen Netzwerkeinheit erhöht werden kann.

In einer anderen Ausführungsvariante generiert der Radiusserver basierend auf seinen serverspezifischen Daten und von der Zentraleinheit übermittelten, benutzerspezifischen Daten das Login-Passwort, welches zu Authentifizierung des Benutzers beim Radiusserver dient. Diese Ausführungsvariante hat u.a. den Vorteil, dass sich durch die vom Benutzer bestimmbaren Zusatzinformationsdaten die Sicherheit weiter erhöhen lässt, indem die Radiusserver mittels eines Schlüssel basierend auf serverspezifischen Daten erst das Login-Passwort generieren, ohne das Login-Passwort übermittelt zu erhalten.

In einer wieder anderen Ausführungsvariante erhält der Benutzer nur Zugriff auf das WLAN desjenigen Radiusservers über welchem der Zugriffsrequest der mobilen Netzwerkeinheit erfolgte. Diese Ausführungsvariante hat u.a. den Vorteil, dass die eingeschränkte Zugriffsmöglichkeit die Authentifikationssicherheit erhöht, ohne dass der Benutzer dadurch irgendwelche Nachteile zu tragen hätte.

In einer weiteren Ausführungsvariante erhält der Benutzer nur Zugriff auf das WLAN desjenigen Radiusservers, dessen geographische und/oder topographische Daten mit den vom Benutzer bestimmbaren Zusatzinformationsdaten übereinstimmen. Diese Ausführungsvariante hat u.a. die gleichen Vorteile wie die vorhergehende.

In einer Ausführungsvariante wird als Identifikationscode des Benutzers eine IMSI (International Mobile Subscriber Identification) und/oder eine MSISDN (Mobile Subscriber ISDN) verwendet. Als MSISDN kann z.B. die MSISDN des Mobilfunkgerätes verwendet werden, an welches das Login-Passwort geschickt wird. Dies hat den Vorteil, dass der Benutzer zusammen mit der Identifikation gerade auch das Mobilfunkgerät angeben kann, an welches die MSISDN geschickt werden soll. So kann mit verschiedenen MSISDN ein bestimmter Benutzer identifiziert und mit dem Login-Passwort etc. entsprechend authentifiziert werden, ohne dass der Benutzer vorgängig im System, z.B. in der Datenbank der Zentraleinheit, registriert sein muss.

Nachfolgend werden Ausführungsvarianten der vorliegenden Erfindung anhand von Beispielen beschrieben. Die Beispiele der Ausführungen werden durch folgende beigelegte Figuren illustriert:

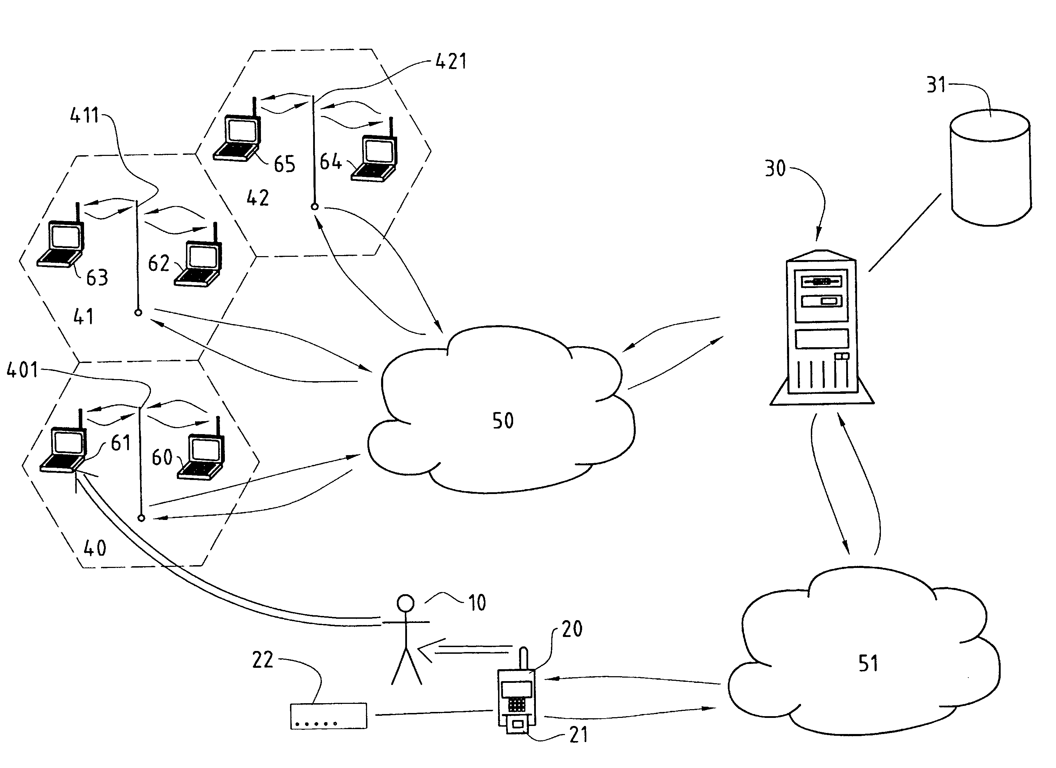

Figur 1 zeigt ein Blockdiagramm, welches schematisch die Architektur einer Ausführungsvariante eines erfindungsgemässen Systems zum Anmelden einer mobilen Netzwerkeinheit 60, ..., 65 eines Benutzers 10 in einem WLAN 40, ..., 48, wobei zur Authentifikation der mobilen Netzwerkeinheit 60, ..., 65 benutzerspezifische Authentifikationsdaten über einen Access Point 401, 411, 421, ..., 481 des WLAN 40,..., 48 an eine Zentraleinheit 30 übermittelt werden.

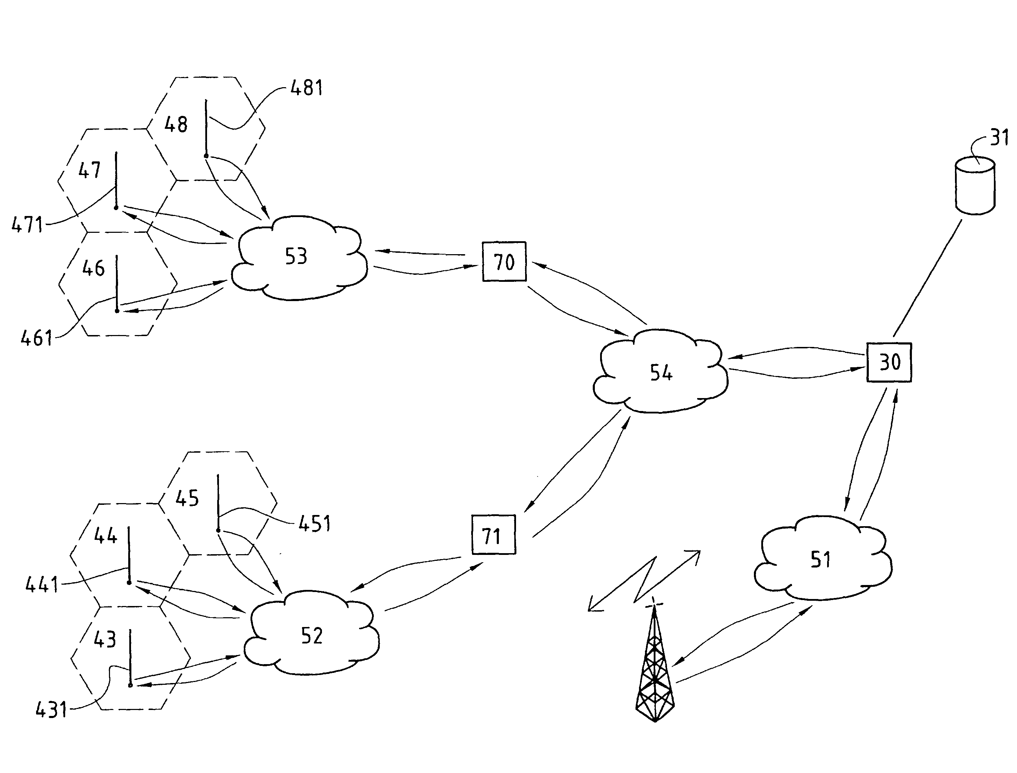

Figur 2 zeigt ein Blockdiagramm, welches ebenfalls schematisch die Architektur eines Systems zum Anmelden einer mobilen Netzwerkeinheit 60, ..., 65 eines Benutzers 10 in einem WLAN 40, ..., 48, wobei zur Authentifikation der mobilen Netzwerkeinheit 60, ..., 65 benutzerspezifische Authentifikationsdaten über einen Access Point 401, 411, 421, ..., 481 des WLAN 40,..., 48 an eine Zentraleinheit 30 übermittelt werden. Bei dieser Ausführungsvariante sind mehrere Radiusserver 70, 71 mit der Zentraleinheit 30 verbunden.

Figur 1 illustriert eine Architektur, die zur Realisierung der Erfindung verwendet werden kann. In diesem Ausführungsbeispiel wird beim Anmelden einer mobilen Netzwerkeinheit 60, ..., 65 eines Benutzers 10 in einem WLAN 40, 41, 42 zur Authentifikation des Benutzers 10 ein Identifikationscode des Benutzers 10 zusammen mit vom Benutzer 10 bestimmbaren Zusatzinformationsdaten über einen Access Point 401, 411, 421 des WLAN 40, 41, 42 an eine Zentraleinheit 30 übermittelt. Die Access Points 401, 411, 421 können z.B. über physikalische Medien 50, wie z.B. Koaxialkabel, Twisted Pair oder optische Glasfaserkabel mit den zugeordneten Radiusservern 70, 71 verbunden sein. Die Verbindung kann Kommunikationsnetze, wie beispielsweise ein Mobilfunknetz, wie ein terrestrisches Mobilfunknetz, z.B. ein GSM- oder UMTS-Netz, oder ein satellitenbasiertes Mobilfunknetz, und/oder ein oder mehrere Festnetze, beispielsweise das öffentlich geschaltete Telefonnetz (PSTN: Public Switched Telephone Network) und/oder ISDN (Integrated Services Digital Network) oder ein geeignetes LAN (Local Area Network) oder WAN (Wide Area Network) umfassen. Die Kommunikation zwischen der Zentraleinheit 30 und den Access Points 431, 441, ..., 481 kann z.B. über ein TCP/IP-Interface und/oder CORBA-Interface, ein ATM-Modul, ein SMS- und/oder USSD-Gateway mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Application Protokoll) oder über einen Nutzkanal erfolgen. Der Datentransfer zwischen der Zentraleinheit 30 und den Access Points 431, 441, ..., 481 wird z.B. über software- oder hardwaremässig implementierte Transfermodule der Zentraleinheit 30 sowie der Access Points 431, 441, ..., 481 eingeleitet und durchgeführt. Die mobilen Netzwerkeinheiten 60, ..., 65 oder sog. mobilen Nodes können z.B. Laptops, Notebooks, PDAs (Personal Digital Assistant) oder Mobilfunkgeräte, insbesondere Mobilfunktelefone sein. Die mobilen Nodes 60, ..., 65 sind mit einer entsprechenden Schnittstelle hard- und softwaremässig ausgestattet, um sie in ein lokales drahtloses Computernetzwerk (WLAN) einzubinden. Sie kommunizieren mittels Radiofrequenzsignalen mit den Access Points 401, 411, 421 des WLAN 40, 41, 42. Die mobilen Nodes können z.B. einen Adapter umfassen, welcher einen Sender/Empfänger sowie eine Kontrollkarte umfasst (wie z.B. Infrarot(IR)-Adapter oder einen Tieffrequenzradiowellen-Adapter). Damit lassen sich die mobilen Nodes 60, ..., 65 innerhalb der Reichweite des wireless LANs frei bewegen. Die Access Points 401, 411, 421 des WLAN 40, 41, 42 können z.B. sowohl die Radiofrequenzsignale der mobilen Nodes 60, ..., 65 verstärken, als auch Bridgefunktionen umfassen, welche es erlauben, vom drahtlosen lokalen Netzwerk 40, 41, 42 auf Nodes eines verdrahteten LAN und umgekehrt zuzugreifen. Zur Übertragung der Radiofrequenzsignale umfassen die Access Points 401, 411, 421 mindestens eine Antenne. Die Antenne kann z.B. eine Dipolantenne, eine Schleifenantenne wie eine Faltdipolantenne, eine Marconi-Antenne oder eine Groundplane-Antenne, eine Richtantenne wie z.B. eine Yagi-, eine Kreuzyagi- oder eine Parabolantenne, eine Rundstrahlantenne oder ein fraktales Antennensystem sein. Die Radiofrequenzsignale liegen typischerweise in den für drahtlose LAN reservierten Frequenzbändern zwischen 800 MHz und 6000 MHz, wie z.B. in der USA von der United States Federal Communication Commission (FCC) festgesetzten drei Frequenzbänder: 902-928 MHz, 2400-2483.5 MHz und 5725-5850 MHz (D 15 of Title 47 Code of Federal Regulations). Sie können aber beispielsweise auch im Bereich von 400 MHz, wie sie z.B. bei elektronischen, drahtlosen Garagenöffnern üblich sind, oder bei den vor kurzem in Deutschland und der Schweiz versteigerten WLL (Wireless-Local-Loop) Frequenzen bei z.B. 26 GHz für Wireless-Local-Loop Verfahren, liegen. Es ist jedoch darauf hinzuweisen, dass auch andere Frequenzen möglich sind, ohne dass das Wesen der Erfindung damit berührt würde. So können prinzipiell für die Erfindung auch Infrarotsignale wie z.B. IrDA, IR-LAN etc. benutzt werden. Die Bridgefunktionen der Basisstation 1 können z.B. gemäss IEEE Std. 802.1D-1990 "Media Access Control Bridges" S. 31-47 realisiert sein. Die vom Benutzer 10 bestimmbaren Zusatzinformationsdaten können beispielsweise geographische und/oder topographische und/oder zeitliche Angaben umfassen. Unter geographische und/oder topographische Angaben können beispielsweise Ortsbezeichnungen, Strassennamen, Orts- und/oder Ländercodes, Gebäudebezeichnungen, geographische Längen- und/oder Breitenangaben, Adressen etc. etc., aber auch topographische Angaben im weiteren Sinn, so z.B. topographische Angaben bezüglich des Netzwerkes, des Dienstanbieters, der Gebäudestruktur etc. fallen. Die Zusatzinformationsdaten können auch aus einer Kombination der oben erwähnten Angaben bestehen. Der Identifikationscode kann z.B. einen Benutzername (Username), Adressangaben oder andere Bezeichnungen umfassen, wie z.B. eine IMSI (International Mobile Subscriber Identification) und/oder eine MSISDN (Mobile Subscriber ISDN) oder irgendeine andere Identifikationsnummer (ID). Als spezielle Ausführungsvariante kann z.B. die MSISDN des Mobilfunkgerätes 20 verwendet werden, an welche das Login-Passwort geschickt wird. Dies hat den Vorteil, dass der Benutzer 10 zusammen mit der Identifikation gerade auch das Mobilfunkgerät 20 angeben kann, an welches die MSISDN geschickt werden soll. So kann sich ein Benutzer 10 mit verschiedenen MSISDN bei der Zentraleinheit 30 identifizieren und später mit dem Login-Passwort 22 etc. entsprechend authentifizieren, ohne dass der Benutzer 10 vorgängig im System, z.B. in der Datenbank 31 der Zentraleinheit 30 registriert sein muss. Die Zentraleinheit 30 kann die Identifikation mittels der MSISDN z.B. über den Mobilfunknetzdienstanbieter des Mobilfunknetzes 51 erhalten. Der Identifikationscode des Benutzers 10 zusammen mit den vom Benutzer 10 bestimmbaren Zusatzinformationsdaten können z.B. mittels Eingabeelementen des mobilen Nodes 60, ..., 65 vom Benutzer 10 eingegeben werden und/oder mit einem IVR-Modul (Interactive Voice Response) der Zentraleinheit 30 übermittelt werden. Basierend auf dem Identifikationscode und den vom Benutzer 10 bestimmbaren Zusatzinformationsdaten wird von der Zentraleinheit 30 ein Login-Passwort 22 generiert und an ein dem Benutzer 10 zugeordnetes Mobilfunkgerät 20 eines Mobilfunknetzes 51 gesendet. Die Identifikation des Mobilfunkgerätes 20 kann z.B. mittels einer Chipkarte 21 erfolgen. Bei der Chipkarte 21 kann es sich z.B. um eine SIM-Karte (Subscriber Identification Module) oder Smart-Card handeln, wobei der Chipkarte 21 jeweils eine Rufnummer zugeordnet ist. Die Zuordnung der Chipkarte 21 zu einer Rufnummer kann z.B. über ein HLR (Home Location Register) erfolgen, indem im HRL die IMSI (International Mobile Subscriber Identification) einer Rufnummer z.B. einer MSISDN (Mobile Subscriber ISDN) zugeordnet abgespeichert ist. Die IMSL kann z.B. in einem geschützten Speicherbereich der Chipkarte 21 abgespeichert sein. Die Chipkarte 21 kann wiederentfernbar über eine kontaktbehaftete und/oder kontaktlose Schnittstelle mit dem Mobilfunkgerät 20 verbunden, wie es in Europa üblich ist oder als fixer Bestandteil in das Mobilfunkgerät 20 integriert sein, wie es in der USA gebräuchlicher ist. Als Identifikation kann z.B. die MSISDN, die IMSI oder eine andere Identifikationsnummer (ID) verwendet werden. Falls die Rufnummer der Chipkarte 21 nicht gleichzeitig als Identifikation verwendet wurde, so existiert eine eindeutige Verknüpfung der Rufnummer mit der Identifikation in der Zentraleinheit 30. Als zusätzliche Sicherheit kann die Identifikation von der Zentraleinheit 30 z.B. mit einem CLI-Modul 21 (Calling Line Identification) mittels Anschlusserkennung der zugeordneten MSISDN automatisch erkannt und verifiziert werden. Das von der Zentraleinheit 30 generierte Login-Passwort 22 kann z.B. mittels SMS (Short Message Service) und/oder USSD (Unstructured Supplementary Service Data) Interface von der Zentraleinheit 30 an das dem Benutzer 10 zugeordnetes Mobilfunkgerät 20 gesendet. Es können dazu aber auch spezielle Datendienste wie GPRS (Generalized Packet Radio Service) oder WAP (Wireless Application Protocol) oder Ähnliches verwendet werden. Das Mobilfunknetz 51 kann z.B. ein terrestrisches Mobilfunknetz, beispielsweise ein GSM- oder UMTS-Netz oder ein satellitenbasiertes Mobilfunknetz, insbesondere Festnetze wie das öffentliche Telefonnetz PSTN umfassen. Der Benutzer 10 erhält so über das Mobilfunkgerät 20 das Login-Passwort 22 und meldet die mobile Netzwerkeinheit 60, ..., 65 mittels des erhaltenen Login-Passworts 22 im WLAN 40, 41, 42 an, wobei benutzerspezifische Authentifikationsdaten, welche mindestens das erhaltene Login-Passwort 22 umfassen, an die Zentraleinheit 30 übermittelt werden. Das Login-Passwort 22 kann der Benutzer z.B. mittels der Eingabeelemente des mobilen Nodes 60, ..., 65 angeben. Die benutzerspezifische Authentifikationsdaten werden mittels der Zentraleinheit 30 mit mindestens Teilen von zur Authentifikation in einer Datenbank 31 zugeordnet abgespeicherten Benutzerdaten verglichen. Die Datenbank 31 kann zugeordnet zur Zentraleinheit 30 oder als eigenständige Netzwerkeinheit realisiert sein. Bei erfolgreicher Authentifizierung gibt die Zentraleinheit 30 die mobilen Netzwerkeinheiten 60, ..., 65 zur Benutzung des WLAN 40, 41, 42 frei. Es ist darauf hinzuweisen, dass das WLAN, wie erwähnt mittels Bridgefunktionen z.B. an weitere Netze, welche festverdrahtete Netzwerke (wired LAN und/oder WAN) umfassen, angebunden sein kann, insbesondere z.B. an Firmen-interne oder - übergreifende Intranets und/oder das weltweite Backbone-Netzwerk, das sog. Internet, und/oder das öffentlich geschaltete Telefonnetzwerk etc. Auch ist zu erwähnen, dass, um den Sicherheitsstandard bei der Übermittlung zwischen den verschiedenen Einheiten der Erfindung (Zentraleinheit 30, Access Point 401, 411, 421, Mobilfunkgerät 20) zu erhöhen, die ausgetauschten Informationen zusätzlich verschlüsselt werden können z.B. durch feste, dynamische, symmetrische, asymmetrische oder andere Verschlüsselungsalgorithmen.

Figur 2 illustriert eine Architektur, die zur Realisierung der Erfindung verwendet werden kann. In diesem Ausführungsbeispiel wird beim Anmelden einer mobilen Netzwerkeinheit eines Benutzers 10 in einem WLAN 43, ..., 48 zur Authentifikation des Benutzers 10 ein Identifikationscode des Benutzers 10 zusammen mit vom Benutzer 10 bestimmbaren Zusatzinformationsdaten über einen Access Point 431, 441, ..., 481 des WLAN 43,..., 48 an eine Zentraleinheit 30 übermittelt. Die mobilen Netzwerkeinheiten 60, ..., 65 oder mobilen Nodes können, wie im Ausführungsbeispiel von Figur 1, z.B. Laptops, Notebooks, PDAs (Personal Digital Assistant) oder Mobilfunkgeräte, insbesondere Mobilfunktelefone sein. Die mobilen Nodes 60, ..., 65 sind mit einer entsprechenden Schnittstelle hard- und softwaremässig ausgestattet, um sie in ein lokales drahtloses Computernetzwerk (WLAN) einzubinden. Sie kommunizieren mittels Radiofrequenzsignalen mit den Access Points 401, 411, 421 des WLAN 40, 41, 42. Die mobilen Nodes können z.B. einen Adapter umfassen, welcher einen Sender/Empfänger sowie eine Kontrollkarte umfasst (wie z.B. Infrarot(IR)-Adapter oder einen Tieffrequenzradiowellen-Adapter). Damit lassen sich die mobilen Nodes 60, ..., 65 innerhalb der Reichweite des wireless LANs frei bewegen. Die weitere technische Ausführung kann dem Ausführungsbeispiel 1 entnommen werden und muss an dieser Stelle zur genügenden Offenbarung nicht wiederholt werden, da es dem Fachmann auf dem Gebiet anhand von Ausführungsbeispiel 1 klar ist. Der Benutzer 10 hat in diesem Ausführungsbeispiel 2 im Gegensatz zum Ausführungsbeispiel 1 die Möglichkeit, sich in unterschiedlichen WLAN über die gleiche Zentraleinheit 30 anzumelden. Dabei kommunizieren jeweils die Access Points 431, 441, ..., 481 eines bestimmten WLAN 43, ..., 48 mit einem zugeordneten Radiusserver 70, 71. Die Access Points 431, 441, ..., 481 können z.B. über physikalische Medien 53, 54, wie z.B. Koaxialkabel, Twisted Pair oder optische Glasfaserkabel mit den zugeordneten Radiusservern 70, 71 verbunden sein. Mehrere Radiusserver 70, 71 unterschiedlicher WLAN 43, ..., 48 sind jeweils mit einer Zentraleinheit 30 ebenfalls z.B. über physikalische Medien 53, 54, wie z.B. Koaxialkabel, Twisted Pair oder optische Glasfaserkabel verbunden. Die Kommunikationskanäle 51/52/53 zwischen der Zentraleinheit 30, den Radiusservern 70, 71 und den Access Points 431, 441, ..., 481 können z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN (Integrated Services Digital Network), das Internet oder ein anderes Kommunikationsnetz, insbesondere ein Mobilfunknetz, wie ein terrestrisches Mobilfunknetz, z.B. ein GSM- oder UMTS-Netz, oder ein satellitenbasiertes Mobilfunknetz umfassen. Die Kommunikation zwischen der Zentraleinheit 30, den Radiusservern 70, 71 und den Access Points 431, 441, ..., 481 kann z.B. über ein TCP/IP-Interface und/oder CORBA-Interface, ein ATM-Modul, ein SMS- und/oder USSD-Gateway mittels speziellen Kurzmeldungen, beispielsweise SMS- (Short Message Services), USSD-(Unstructured Supplementary Services Data) Meldungen oder andere Techniken wie MExE (Mobile Execution Environment), über Protokolle wie GPRS (Generalized Packet Radio Service), WAP (Wireless Application Protokoll) oder über einen Nutzkanal erfolgen. Der Datentransfer zwischen der Zentraleinheit 30, den Radiusservern 70, 71 und den Access Points 431, 441, ..., 481 wird z.B. über software- oder hardwaremässig implementierte Transfermodule der Zentraleinheit 30, den Radiusserver 70, 71 sowie der Access Points 431, 441, ..., 481 eingeleitet und durchgeführt. Die vom Benutzer 10 bestimmbare Zusatzinformationsdaten können beispielsweise geographische und/oder topographische und/oder zeitliche Angaben umfassen. Basierend auf dem Identifikationscode, der vom Benutzer 10 bestimmbaren Zusatzinformationsdaten und/oder serverspezifischen Daten der Radiusserver 70, 71 generiert wird, in dessen WLAN 43, ..., 48 der Benutzer 10 die mobile Netzwerkeinheit anmeldet, wird von der Zentraleinheit 30 ein Login-Passwort 22 generiert und an ein dem Benutzer 10 zugeordnetes Mobilfunkgerät 20 eines Mobilfunknetzes 51 gesendet. Das Login-Passwort 22 wird von der Zentraleinheit ebenfalls an den Radiusserver 70, 71 übermittelt. In einem anderen Ausführungsbeispiel ist es auch vorstellbar, dass der Radiusserver 70, 71 basierend auf den eigenen serverspezifischen Daten und von der Zentraleinheit 30 übermittelten, benutzerspezifischen Daten das Login-Passwort 22 generiert, welches zur Authentifizierung des Benutzers 10 beim Radiusserver 70, 71 dient. Dadurch muss das Login-Passwort 22 von der Zentraleinheit 30 nicht mehr an den Radiusserver 70, 71 übermittelt werden, was die Sicherheit zusätzlich erhöht. Der Benutzer 10 meldet die mobile Netzwerkeinheit mittels des erhaltenen Login-Passworts 22 bei den entsprechenden Radiusserver 70, 71 im WLAN 43, ..., 48 an, wobei benutzerspezifische Authentifikationsdaten, welche mindestens das erhaltene Login-Passwort 22 umfassen, an die Zentraleinheit 30 übermittelt werden. Die benutzerspezifischen Authentifikationsdaten werden mittels der Zentraleinheit 30 und/oder dem Radiusserver 70, 71 mit mindestens Teilen von zur Authentifikation in einer Datenbank 31 zugeordnet abgespeicherten Benutzerdaten verglichen. Die Datenbank 31 kann zugeordnet zur Zentraleinheit 30 oder als eigenständige Netzwerkeinheit realisiert sein. Ebenfalls können die Radiusserver 70, 71 entsprechende Datenbanken besitzen. Bei erfolgreicher Authentifizierung gibt der Radiusserver 70, 71 die mobilen Netzwerkeinheit zur Benutzung des WLAN 43, ..., 48 frei. In einem weiteren Ausführungsbeispiel, als Variante zum oben Beschriebenen, ist es auch möglich, dass der Benutzer 10 nur Zugriff auf das WLAN 43, ..., 48 desjenigen Radiusservers 70, 71 erhält, über welchem der Zugriffsrequest der mobilen Netzwerkeinheit erfolgte und/oder, dessen geographischen und/oder topographischen und/oder zeitlichen Daten mit den vom Benutzer 10 bestimmbaren Zusatzinformationsdaten übereinstimmen. Durch das Einschränken des topographischen oder zeitlichen Rahmens zum Anmelden, ist es klar, dass die Sicherheit bei der Authentifikation um ein Vielfaches erhöht werden kann. Auch bei diesem Ausführungsbeispiel ist zu erwähnen, dass, um den Sicherheitsstandard bei der Übermittlung zwischen den verschiedenen Einheiten der Erfindung (Zentraleinheit 30, Radiusserver 70, 71, Access Point 431, 441, ..., 481, Mobilfunkgerät 20) zu erhöhen, die ausgetauschten Informationen zusätzlich verschlüsselt werden können, z.B. durch feste, dynamische, symmetrische, asymmetrische oder andere Verschlüsselungsalgorithmen.

### Liste der Bezugszeichen

- 10: Benutzer
- 20: Mobilfunkgerät
- 21: Chipkarte (SIM-Karte)
- 22: Login-Passwort
- 30: Zentraleinheit
- 31: Datenbank
- 40,: ..., 48 Zellen des WLAN
401, 411, ..., 481 Access Point bzw. Basisstationen
- 50, 52, 53, 54: Netzwerke
- 51: Mobilfunknetz
- 60, ..., 65: mobile Netzwerkeinheiten
- 70, 71: Radius Server

## Patentansprüche

1. Verfahren zum Anmelden einer mobilen Netzwerkeinheit (60, ..., 65) eines Benutzers (10) in einem WLAN (40, ..., 48), wobei zur Authentifikation des Benutzers (10) benutzerspezifische Authentifikationsdaten über einen Access Point (401, 411, 421, ..., 481) eines WLAN (40,..., 48) an eine Zentraleinheit (30) übermittelt werden, wobei die benutzerspezifischen Authentifikationsdaten mit mindestens Teilen von zur Authentifikation in einer Datenbank (31) zugeordnet abgespeicherten Benutzerdaten mittels der Zentraleinheit (30) verglichen werden und wobei bei erfolgreicher Authentifizierung die mobile Netzwerkeinheit (60, ..., 65) zur Benutzung eines WLAN (40, ..., 48) freigegeben wird, **dadurch gekennzeichnet,**
**dass** die Access Points (401, 411, 421, ..., 481) eines WLAN (40, ..., 48) mit einem zugeordneten Radiusserver (70, 71) kommunizieren und mehrere Radiusserver (70, 71 ) unterschiedlicher WLAN (40, ..., 48) mit der Zentraleinheit (30) verbunden sind, an welche Zentraleinheit (30) die mobile Netzwerkeinheit (60, ..., 65) einen Identifikationscode des Benutzers (10) zusammen mit vom Benutzer (10) bestimmbaren Zusatzinformationsdaten übermittelt,
**dass** die Zentraleinheit (30) basierend auf dem Identifikationscode und der vom Benutzer (10) bestimmbaren Zusatzinformationsdaten ein Login-Passwort (22) generiert, wobei das Login-Passwort (22) zusätzlich basierend auf serverspezifischen Daten des Radiusservers (70, 71) generiert wird, in dessen WLAN (40, ..., 48) der Benutzer (10) die mobile Netzwerkeinheit (60, ..., 65) anmeldet, und
**dass** die Zentraleinheit (30) das Login-Passwort (22) an ein dem Benutzer (10) zugeordnetes Mobilfunkgerät (20) eines Mobilfunknetzes (51) sendet, mittels welchem erhaltenen Login-Passworts (22) der Benutzer (10) die mobile Netzwerkeinheit (60, ..., 65) im WLAN (40, ..., 48) anmeldet.

2. Verfahren nach Anspruch 1, **dadurch gekennzeichnet, dass** die vom Benutzer (10) bestimmbaren Zusatzinformationsdaten geographische und/oder topographische Angaben umfassen.

3. Verfahren nach einem der Ansprüche 1 oder 2, **dadurch gekennzeichnet, dass** die vom Benutzer (10) bestimmbaren Zusatzinformationsdaten Zeitangaben umfassen.

4. Verfahren nach einem der Ansprüche 1 bis 3, **dadurch gekennzeichnet, dass** der Radiusserver (70, 71) basierend auf seinen serverspezifischen Daten und von der Zentraleinheit (30) übermittelten, benutzerspezifischen Daten das Login-Passwort (22) generiert, welches zur Authentifizierung des Benutzers (10) beim Radiusserver (70, 71) dient.

5. Verfahren nach einem der Ansprüche 1 bis 4, **dadurch gekennzeichnet, dass** der Benutzer (10) nur Zugriff auf das WLAN (40, .... 48) desjenigen Radiusservers (70, 71) erhält, über welchem der Zugriffsrequest der mobilen Netzwerkeinheit (60, ..., 65) erfolgte.

6. Verfahren nach einem der Ansprüche 1 bis 5, **dadurch gekennzeichnet, dass** der Benutzer (10) nur Zugriff auf das WLAN (40, ..., 48) desjenigen Radiusservers (70, 71) erhält, dessen geographische und/oder topographische Daten mit den vom Benutzer (10) bestimmbaren Zusatzinformationsdaten übereinstimmen.

7. System zum Anmelden einer mobilen Netzwerkeinheit (60,...,65) eines Benutzers (10) in einem WLAN (40, ..., 48), wobei das WLAN (40, ..., 48) mindestens einen Access Point (401, 411, 421, ..., 481) umfasst, welcher Mittel zum Übermitteln von benutzerspezifischen Authentifikationsdaten der mobilen Netzwerkeinheit (60, ..., 65) über einen Access Point (401, 411, 421, ..., 481) des WLAN (40, ..., 48) an eine Zentraleinheit (30) umfasst, wobei die Zentraleinheit (30) Mittel zum Vergleichen der benutzerspezifische Authentifikationsdaten mit mindestens Teilen von zur Authentifikation in einer Datenbank (31) zugeordnet abgespeicherten Benutzerdaten umfasst, **dadurch gekennzeichnet,**
**dass** das System mehrere unterschiedliche WLAN (40, ..., 48) umfasst, wobei jedes WLAN (40, ..., 48) einen zugeordneten Radiusserver (70, 71) mit jeweils mindestens einem Access Point (401, 411, 421, ..., 481) umfasst und wobei die Radiusserver (70, 71) unterschiedlicher WLAN (40, ..., 48) mit der Zentraleinheit (30) verbunden sind
**dass** die mobile Netzwerkeinheit (60, ..., 65) Mittel zum Übermitteln von einem Identifikationscode des Benutzers (10) zusammen mit vom Benutzer (10) bestimmbaren Zusatzinformationsdaten an die Zentraleinheit (30) umfasst,
**dass** die Zentraleinheit (19) Mittel zum Generieren eines Login-Passworts (22) basierend auf dem Identifikationscode und den vom Benutzer (10) bestimmbaren Zusatzinformationsdaten umfasst, wobei das Generieren des Login-Passworts (22) zusätzlich serverspezifische Daten eines Radiusserver (70, 71) umfasst, und
**dass** die Zentraleinheit (30) Mittel zum Senden des Login-Passworts (22) an ein Mobilfunknetz (51) umfasst, wobei der Benutzer (10) Abonnent des genannten Mobilfunknetzes (51) ist.

8. System nach Anspruch 7, **dadurch gekennzeichnet, dass** die vom Benutzer (10) bestimmbaren Zusatzinformationsdaten geographische und/oder topographische Angaben umfassen.

9. System nach einem der Ansprüche 7 oder 8, **dadurch gekennzeichnet, dass** die vom Benutzer (10) bestimmbaren Zusatzinformationsdaten Zeitangaben umfassen.

10. System nach einem der Ansprüche 7 bis 9, **dadurch gekennzeichnet, dass** der Radiusserver (70, 71) ebenfalls Mittel zum Generieren des Login-Passworts (22) zur Authentifizierung des Benutzers (10) basierend auf übermittelten Daten der Zentraleinheit (30) umfasst.

11. System nach einem der Ansprüche 7 oder 10, **dadurch gekennzeichnet, dass** für den Benutzer (10) nur das WLAN (40, ..., 48) desjenigen Radiusservers (70, 71) zugreifbar ist, über welchem der Zugriffsrequest der mobilen Netzwerkeinheit (60, ..., 65) erfolgte.

12. System nach einem der Ansprüche 7 bis 11, **dadurch gekennzeichnet, dass** für den Benutzer (10) das WLAN (40, ..., 48) desjenigen Radiusservers (70, 71) zugreifbar ist, dessen geographische und/oder topographische Daten mit den vom Benutzer (10) bestimmbaren Zusatzinformationsdaten übereinstimmen.

## Claims

1. Method for registering a mobile network unit (60,..., 65) of a user (10) in a WLAN (40, ..., 48), user-specific authentication data for authentication of the user (10) being transmitted via an access point (401, 411, 421, ..., 481) of a WLAN (40, ..., 48) to a central unit (30), the user-specific authentication data being compared, by means of the central unit (30), with parts of stored user data assigned for authentication in a data base (31), and, in the case of successful authentication, the mobile network unit (60, ..., 65) being cleared for use of a WLAN (40, ..., 48), **characterised**
**in that** the access points (401, 411, 421, ..., 481) of a WLAN (40, ..., 48) communicate with an assigned radius server (70, 71), and a plurality of radius servers (70, 71) of different WLAN (40, ..., 48) are connected with the central unit (30), to which central unit (30) the mobile network unit (60, ..., 65) transmits to <sic.> an identification code of the user (10) together with auxiliary information data definable by the user,
**in that**, based on the identification code and the auxiliary information data definable by the user (10), the central unit (30) generates a log-in password (22), the log-in password (22) being generated additionally based on the server-specific data of the radius server (70, 71) in whose WLAN (40, ..., 48) the user (10) is registering the mobile network unit (60, ..., 65), and
**in that** the central unit (30) sends the log-in password (22) to a mobile radio device (20), assigned to the user (10), of a mobile radio network (51), by means of which received log-in password (22) the user (10) registers the mobile network unit (60, ..., 65) in the WLAN (40, ..., 48).

2. Method according to claim 1, **characterised in that** the auxiliary information data definable by the user (10) comprise geographic and/or topographic indications.

3. Method according to one of the claims 1 or 2, **characterised in that** the auxiliary information data definable by the user (10) comprise time indications.

4. Method according to one of the claims 1 to 3, **characterised in that**, based on its server-specific data and user-specific data transmitted from the central unit (30), the radius server (70, 71) generates the log-in password (22) which serves the authentication of the user (10) at the radius server (70, 71).

5. Method according to one of the claims 1 to 4, **characterised in that** the user (10) gains access only to the WLAN (40, ..., 48) of that radius server (70, 71) via which the access request of the mobile network unit (60, ..., 65) took place.

6. Method according to one of the claims 1 to 5, **characterised in that** the user (10) gains access only to the WLAN (40, ..., 48) of that radius server (70, 71) whose geographic and/or topographic data coincide with the auxiliary information data definable by the user (10).

7. System for registering a mobile network unit (60, ..., 65) of a user (10) in a WLAN (40, ..., 48), the WLAN (40, ..., 48) comprising at least one access point (401, 411, 421, ..., 481) which comprises means for transmitting user-specific authentication data of the mobile network unit (60, ..., 65) via an access point (401, 411, 421, ..., 481) of the WLAN (40, ..., 48) to a central unit (30), the central unit (30) comprising means of comparing the user-specific authentication data with at least parts of stored user data assigned for authentication in a database (31), **characterised**
**in that** the system comprises a plurality of different WLAN (40, ..., 48), each WLAN (40, ..., 48) comprising an assigned radius server with in each case at least one access point (401, 411, 421, ..., 481), and the radius server (70, 71) of different WLAN (40, ..., 48) being connected to the central unit (30),
**in that** the mobile network unit (60, ..., 65) comprises means for transmitting an identification code of the user (10) together with auxiliary information data definable by the user (10) to the central unit (30),
**in that** the central unit (19) comprises means for generating a log-in password (22) based on the identification code and the auxiliary information data definable by the user (10), the generation of the log-in password (22) additionally comprising server-specific data of a radius server (70, 71 ), and
**in that** the central unit (30) comprises means for sending the log-in password to a mobile radio network (51), the user (10) being a subscriber to said mobile radio network (51).

8. System according to claim 7, **characterised in that** the auxiliary information data definable by the user (10) comprise geographic and/or topographic indications.

9. System according to claim 7 or 8, **characterised in that** the auxiliary information data definable by the user (10) comprise time indications.

10. System according to one of the claims 7 to 9, **characterised in that** the radius server (70, 71) likewise comprises means for generating the log-in password (22) for authentication of the user (10) based on transmitted data of the central unit (30).

11. System according to one of the claims 7 or 10, **characterised in that** accessible to the user (10) is only the WLAN (40, ..., 48) of that radius server (70, 71) via which the access request of the mobile network unit (60, ..., 65) took place.

12. System according to one of the claims 7 to 11, **characterised in that** accessible to the user (10) is the WLAN (40, ..., 48) of that radius server (70, 71) whose geographic and/or topographic data coincide with the auxiliary information data definable by the user (10).

## Revendications

1. Procédé pour l'enregistrement d'une unité de réseau mobile (60, ..., 65) d'un utilisateur (10) dans un réseau local sans fil (WLAN = Wireless Local Area Network)(40, ..., 48), pour l'authentification de l'utilisateur (10), des données d'authentification spécifiques à l'utilisateur étant transmises à une unité centrale (30) par l'intermédiaire d'un point d'accès (401, 411, 421, ..., 481) d'un réseau local sans fil (40, ..., 48), les données d'authentification spécifiques à l'utilisateur étant comparées pour l'authentification à au moins des parties de données utilisateurs associées et stockées dans une banque de données au moyen de l'unité centrale (30) et en cas d'authentification réussie, l'unité mobile de réseau (60, ..., 65) étant libérée pour l'utilisation d'un réseau local sans fil (40, ..., 48), **caractérisé en ce que**
les points d'accès (401, 411, 421, ..., 481) d'un réseau local sans fil (40, ..., 48) communiquent avec un serveur Radius associé (70, 71) (Remote Authentification Dial in User Service) et plusieurs serveurs Radius (70, 71) de différents réseaux locaux sans fil (40, ..., 48) sont reliés à l'unité centrale (30), unité centrale (30) à laquelle l'unité de réseau mobile (60, ..., 65) transmet un code d'identification de l'utilisateur (10) ensemble avec les données d'informations supplémentaires définissables par l'utilisateur (10),
**en ce que** l'unité centrale (30) génère en se basant sur le code d'identification et sur les données d'information supplémentaires déterminables par l'utilisateur (10) un mot de passe d'ouverture de session (22), le mot de passe d'ouverture de session (22) étant généré en se basant en supplément sur des donnés spécifiques au serveur Radius (70, 71), dans le réseau local sans fil (40, ..., 48) duquel l'utilisateur (10) enregistre l'unité de réseau mobile (60, ..., 65) et
**en ce que** l'unité centrale (30) envoie le mot de passe d'ouverture de session (22) à un appareil radio mobile associé à l'utilisateur (10) d'un réseau radio mobile (51), mot de passe reçu d'ouverture de session (22) au moyen duquel l'utilisateur (10) enregistre l'unité de réseau mobile (60, ..., 65) dans le réseau local sans fil (40, ..., 48).

2. Procédé selon la revendication 1, **caractérisé en ce que** les données d'informations définissables par l'utilisateur (10) comprennent des indications géographiques et/ou topographiques.

3. Procédé selon l'une des revendications 1 ou 2, **caractérisé en ce que** les données d'informations supplémentaires déterminables par l'utilisateur (10) comprennent des indications de temps.

4. Procédé selon l'une des revendications 1 à 3, **caractérisé en ce qu'**en se basant sur ses données spécifiques au serveur et sur des données spécifiques à l'utilisateur transmises par l'unité centrale (30), le serveur Radius (70, 71) génère le mot de passe d'ouverture de session (22) qui sert d'authentification de l'utilisateur (10) auprès du serveur Radius (70, 71).

5. Procédé selon l'une des revendications 1 à 4, **caractérisé en ce que** l'utilisateur (10) n'obtient accès qu'au réseau local sans fil (40, ..., 48) du serveur Radius (70, 71) par lequel s'effectue la requête d'accès de l'unité mobile de réseau (60, ..., 65).

6. Procédé selon l'une des revendications 1 à 5, **caractérisé en ce que** l'utilisateur (10) n'obtient l'accès qu'au réseau local sans fil (40, ..., 48) du serveur Radius (70, 71) dont les données géographiques et/ou topographiques correspondent aux données d'informations supplémentaires déterminables par l'utilisateur (10).

7. Système pour l'enregistrement d'une unité de réseau mobile (60, ..., 65) d'un utilisateur (10) dans un réseau local sans fil (40, ..., 48), le réseau local sans fil (40, ..., 48) comprenant au moins un point d'accès (401, 411, 421, ..., 481) lequel comprend des moyens pour la transmission de données d'authentification spécifiques à l'utilisateur de l'unité de réseau mobile (60, ..., 65) par l'intermédiaire d'un point d'accès (401, 411, 421, ..., 481) du réseau local sans fil (40, ..., 48) à une unité centrale (30), l'unité centrale (30) comprenant des moyens pour la comparaison des données d'authentification spécifiques à l'utilisateur à au moins des parties de données d'utilisateur associées pour l'identification et stockée dans une banque de données (31), **caractérisé**
**en ce que** le système comprend plusieurs réseaux locaux sans fil (40, ..., 48), chaque réseau local sans fil (40, ..., 48) comprenant un serveur Radius associé (70, 71) avec au moins respectivement un point d'accès (401, 411, 421, ..., 481) et le serveur Radius (70, 71) de différents réseaux locaux sans fil (40, ..., 48) étant relié à l'unité centrale (30),
**en ce que** l'unité de réseau mobile (60, ..., 65) comprend des moyens pour la transmission d'un code d'identification de l'utilisateur (10) ensemble avec des données supplémentaires d'informations déterminables par l'utilisateur (10) à l'unité centrale (30),
**en ce que** l'unité centrale (19) comprend des moyens pour la génération d'un mot de passe d'ouverture de session (22) en se basant sur le code d'identification et sur des données supplémentaires d'informations déterminables par l'utilisateur (10), la génération du mot de passe d'ouverture de session (22) comprenant en plus des données spécifiques du serveur Radius (70, 71) et
**en ce que** l'unité centrale (30) comprend des moyens pour envoyer le mot de passe d'ouverture de session (22) à un réseau radio mobile (51), l'utilisateur (10) étant abonné audit réseau radio mobile (51).

8. Système selon la revendication 7, **caractérisé en ce que** les données supplémentaires d'informations déterminables par l'utilisateur (10) comprennent des indications géographiques et/ou topographiques.

9. Système selon l'une des revendications 7 ou 8, **caractérisé en ce que** les données supplémentaires d'informations déterminables par l'utilisateur (10) comprennent des indications de temps.

10. Système selon l'une des revendications 7 à 9, **caractérisé en ce que** le serveur Radius (70, 71) comprend également des moyens pour la génération du mot de passe d'ouverture de session (22) pour l'authentification de l'utilisateur (10) en se basant sur des données transmises de l'unité centrale (30).

11. Système selon l'une des revendications 7 ou 10, **caractérisé en ce que** l'utilisateur (10) n'obtient accès qu'au réseau local sans fil (40, ..., 48) du serveur Radius (70, 71) par lequel s'effectue la requête d'accès de l'unité mobile de réseau (60, ..., 65).

12. Système selon l'une des revendications 7 à 11, **caractérisé en ce que** l'utilisateur (10) n'obtient l'accès qu'au réseau local sans fil (40, ..., 48) du serveur Radius (70, 71) dont les données géographiques et/ou topographiques correspondent aux données d'informations supplémentaires déterminables par l'utilisateur (10).
